# EUROPEAN PATENT SPECIFICATION

(11) **EP 0 507 368 B1**
(45) Date of publication and mention of the grant of the patent: **22.09.1993**
(21) Application number: 92200680.4
(22) Date of filing: 11.03.1992
(51) Int. Cl.: C04B 28/26, C04B 20/02

(54) **A method of preparing a binder**
Verfahren zur Herstellung von einem Binder
Méthode pour préparer un liant

(30) Priority: 05.04.1991 SE 9101012
(43) Date of publication of application: 07.10.1992
(73) Proprietor: THORS KEMISKE FABRIKKER A/S, N-1473 Skarer (NO)
(72) Inventor: Johansson, Jan-Allan, S-417 26 Göteborg (SE)
(74) Representative: Schöld, Zaid

(56) References cited:
- FR-A- 1 420 803
- FR-A- 1 489 827
- FR-A- 2 494 262
- US-A- 4 000 241

## Description

The invention relates to a method of preparing a silicate based binder containing a filler by treating a filler with an acid in a slurry which then is mixed with an aqueous solution of an alkali metal silicate. The invention also relates to a product obtainable by the method.

Silicate based binders are advantageous for applications requiring durability at high temperatures. They also show low toxicity as they do not contain organic solvents, formic aldehyde or similar substances.

In order to increase the strength of a silicate binder and to decrease the tendency of formation of cracks, it is desirable to include fillers such as kaolin. However, it has been found difficult to obtain a storage stable composition since the filler tends to settle after one or a few weeks already.

US patent 4000241 discloses a method of forming a solid insulation from expanded perlite. The perlite particles are moistened with an acid and then sprayed with a sodium silicate solution. Free flowing perlite particles are obtained, not a suspension of particles in a silicate solution.

FR patent 1420803 discloses a heat expandable composition containing a silicate solution. The composition may contain a filler, but the problem of obtaining a storage stable composition is not dealt with.

The invention intends to solve the above problem by providing a method of preparing a silicate based binder containing a filler according to the appended claim 1. More specifically, the invention concerns a method, wherein a filler is treated with an acid in a slurry, whereupon the slurry is mixed with an aqueous solution containing an alkali metal silicate to a substantially homogenous suspension. Without being bound to any specific theory, it is assumed that the acid treatment changes the charges of the filler, thus inhibiting the tendency of aggregate formation and facilitating the dispersal in the silicate solution. The acid treatment is preferably performed by mixing the filler with an aqueous solution containing an acid until a pliable paste forms, which generally takes from about 10 minutes to about 2 hours.

The alkali metal silicate preferably has a molar ratio SiO₂:M₂O from about 2 to about 4, most preferably from about 2.6 to about 3.4, M being an alkali metal, preferably sodium, potassium or mixtures thereof. If the molar ratio is too low, the solution becomes very alkaline and unpleasant to handle, if the molar ratio is too high, the solution becomes less stable. If M to a great extent consists of potassium, a higher molar ratio is permitted. Prior to the addition of the filler, the dry content of the alkali metal silicate solution preferably is from about 25 to about 50% by weight. The total amount of alkali metal silicate in the final product is preferably from about 5 to about 30% by weight, most preferably from about 10 to about 25% by weight.

The filler to be modified with an acid, should be comparatively stable in acidic environment which excludes, for instance, fillers containing high amounts of carbonate which in acidic solutions dissolves under gas generation. In order to decrease the risk for gelling of the final binder during long time storage, frequently up to 6 or 12 months, the fillers used should also be substantially stable in alkali metal silicate solutions, thus excluding, for instance, fillers containing high amounts of soluble silicon which would increase the molar ratio SiO₂:M₂O, soluble calcium which would form hardly soluble calcium silicate, or soluble sulfate which would form sodium sulfate. Thus, as different from preparation of e.g. mortar, sand containing high amounts of quarts should not be used. However, a great number of commonly appearing fillers can be used, alone or in mixtures. Some of these contain silicon and/or calcium which however is so firmly bonded that the fillers are substantially inert in alkali metal silicate solutions. If several of these fillers are used, it is sufficient to treat one of them with an acid prior to addition to the alkali metal silicate. Examples of fillers that can be used include kaolin, feldspar, perlite, ceno-spheres, (e.g. fillite^{(R)}), titanium dioxide, aluminum trihydrate, muscovite, diatomite and talc. If the filler particles are too large, the risk for sedimentation at storage increases. The diameter of the particles is preferably less than about 100 µm, most preferably less than about 80 µm. There is no critical lower limit, except for when the filler contains one or several components dissolving slowly in the silicate, in which case it is preferred that the particle diameter exceeds about 1 µm. In other cases, if for example kaolin is used, particles with a diameter down to about 0.1 µm or smaller can be used without problem. The amount of filler to be added depends on the desired consistency of the binder, which depends on how it is intended to be applied. Generally, it is preferred to add from about 4 to about 80% by weight, most preferably from about 10 to about 60% by weight of filler based on the amount of dry alkali metal silicate.

The filler can be treated with inorganic acids such as hydrochloric acid, sulfuric acid or nitric acid, but in order to avoid introduction of foreign elements into the binder, organic acids are preferred. These acids should be water soluble and could for example be selected from formic acid, acetic acid, propionic acid, valeric acid, malonic acid, succinic acid, adipic acid, maleic acid, fumaric acid, glutaric acid, lactic acid, citric acid, malic acid, tartaric acid, glycolic acid, di-glycolic acid or salicylic acid. It is obvious to a person skilled in the art that all water soluble acids, such as those mentioned above, can be combined with any filler not reacting with the acid used and which filler is substantially stable in alkali metal silicate solutions, such as any of the above mentioned fillers.

It has been found that the viscosity of a slurry of an acid and a filler is more affected by the acid content than by the dry content. The amount of acid should therefore be sufficient to give a slurry possible to handle. In rational preparation of a binder, it is preferred that the amount of acid is sufficient to give a slurry possible to pump, which normally means that its viscosity is less than about 20000 cp. The numerical value of the minimum amount of acid depends on the acid and the filler used, and can for the specific system easily be determined by a person skilled in the art. A very approximate value of the minimum amount of acid at a dry content from about 40 to about 80% by weight can often be set within the range from about 5 to about 10% by weight of acid, based on the amount of the filler. The amount of acid should not be so high as to cause gelling of the alkali metal silicate after the mixing. The maximal permitted amount depends on the alkalinity of the silicate which is determined by the molar ratio SiO₂:M₂O. It is often preferred that the amount of acid does not exceed about 15% by weight of acid based on the amount of alkali metal silicate, but higher amount of the acid can be used if it is weak and/or the molar ratio SiO₂:M₂O is low. Also this value can easily be determined experimentally. It is also obvious to a person skilled in the art that all suitable acids can be used within the whole range of the ratio SiO₂:M₂O within the scope of the invention, as long as the amount of acid is adapted to the amount of filler and the ratio SiO₂:M₂O.

The method according to the invention can easily be performed in big scale, batchwise, semi-batchwise or continuously, using different kinds of mixing equipment well known to a person skilled in the art. The temperature may, for example, be maintained from about 0 to about 50°C, preferably from about 15 to about 35°C.

A product prepared according to the invention has been found to be considerably more stable than if the filler has been mixed directly into the alkali metal silicate solution. The product is preferably stored airtight and can then be applied through spraying, puttying or any other suitable method. It coagulates by its own, within one or a few days, when the water is permitted to evaporate which optionally may be enforced by heat treatment. When the product is dry, it withstands variable climate, dry as well as humid, and temperatures of at least 850°C, without degrading or losing much of its strength.

A product prepared according to the invention can also be supplied with other additives to give desired properties. For instance, the resistance against humidity can be increased with alkali metal borates such as tetra-or metaborate of sodium or potassium, the wetting properties can be improved with surfactants, the rheology can be modified with thickeners, and the fire resistance can be improved with aluminum trihydrate.

It is also possible to obtain a new heat expandable composition through the addition of a softening agent in combination with a heat expandable agent. The heat expandable composition thereby obtained comprises alkali metal silicate and a filler treated according to the invention, a softening agent mixable with the silicate, and a heat expandable agent.

The heat expandable agent should preferably increase its volume considerably at heating, preferably at least with a factor 5, most preferably with a factor from about 8 to about 80, suitably at a temperature from about 80 to about 200°C, preferably from about 80 to about 120°C. The expanding agent can, for example, be expandable graphite or micro spheres. It is particularly preferred that the expanding agent includes micro spheres expandable in heat, the spheres comprising a thermoplastic shell enclosing a volatile liquid functioning as a blowing agent. At heating, the polymer shell softens at the same time as the liquid evaporates, the micro sphere thus expanding and increasing its diameter with a factor from about 2 to about 5. The thermoplastic shell may, for example, consist of polymers or copolymers polymerized from monomers such as vinyl chloride, vinylidene chloride, acrylonitrile, methyl methacrylate, styrene, or mixtures thereof. The blowing agent preferably constitutes from about 5 to about 30 % by weight of the whole micro sphere, and may for example comprise freons such as trichloro fluoromethane, hydrocarbons such as n-pentane, i-pentane, neo-pentane, butane, i-butane or other blowing agents conventionally employed in micro spheres of the type referred to. Micro spheres not expanded should have a diameter not exceeding about 100 µm, preferably not exceeding about 80 µm. It is advantageous to use as small spheres as possible, but it may be difficult to get, for a reasonable price, micro spheres with a diameter less than about 1 µm. One example of a suitable and commercially available micro sphere product is Expancel^{(R)} which has a thermoplastic shell of a vinylidene chloride/acrylonitrile copolymer, and iso butane as a blowing agent. The composition should contain sufficient of expanding agent for enabling the volume to increase with a factor of at least 2, preferably from about 4 to about 6, at the temperatures mentioned above. If the expanding agent substantially consists of micro spheres as described above, the composition preferably contains from about 2 to about 40% by weight, most preferably from about 10 to about 30% by weight of the expanding agent.

The softening agent should be mixable with the silicate and can, for example, be selected from glycerol, acrylate dispersions, mono ethylene glycol, polyethylene glycol, latex dispersions, starch stable at alkaline pH, or mixtures thereof. It is, however, obvious to a person skilled in the art, that many other softening agents mixable with the silicate can be used. The softening agent should be included in an effective amount for the composition to be flexible enough for enabling expansion of at least twice, preferably from about 4 to about 6 times its own volume without losing its insulating properties. However, the content should not be so high that the adhesive properties of the composition comes to an unacceptable low level. Generally, the composition preferably contains from about 5 to about 30% by weight, most preferably from about 10 to about 20% by weight of the softening agent.

A heat expandable composition prepared according to the invention is useful as a fire protecting insulation material, expanding from about 2 to about 5 times its own volume at heating above a certain temperature, preferably within the range from about 80 to about 200°C. In expanded state, it withstands temperatures up to at least about 850°C without collapsing or degrading. The composition is also useful as a heat expandable adhesive composition, thus enabling preparation of tight adhesive joints in spaces difficult to reach or joints penetrating porous materials.

The invention also concerns a silicate-based binder comprising a filler, which binder is obtainable by the described method of its preparation.

The invention is now further illustrated through some examples which, however, are not intended to limit its scope. If not otherwise stated, all contents refer to percent by weight.

### EXAMPLE 1:

4 grams 35% tartaric acid was dissolved in 4 grams water, whereupon 10 grams kaolin was added. The mixture was allowed to stand under agitation for about 1 hour until a pliable paste formed. The paste was then mixed with 100 grams sodium water glass having a molar ratio SiO₂:Na₂O of 2.8 and a dry content of 45%, whereupon the mixture was maintained under agitation for about 4-5 hours until a homogenous suspension without lumps was formed. The temperature was about 25°C during the whole procedure. The composition was still stable after 1 week of storage at room temperature.

### EXAMPLE 2:

The procedure according example 1 was repeated with the following exceptions: The acid consisted of 4.5 grams 35% acetic acid and was dissolved into 4.5 grams water, the filler consisted of 15 grams feldspar, the sodium water glass had a molar ratio SiO₂:Na₂O of 2.4 and had a dry content of 50%. The composition was still stable after 1 week of storage in room temperature.

### EXAMPLE 3:

The procedure according example 1 was repeated with the following exceptions: The acid consisted of 3 grams 36% hydrochloric acid and was dissolved into 3 grams water, the filler consisted of 10 grams kaolin and 5 grams titanium dioxide, the sodium water glass had a molar ratio SiO₂:Na₂O of 3 and had a dry content of 38%. The composition was still stable after 1 week of storage at room temperature.

### EXAMPLE 4 (comparative example):

10 grams kaolin was mixed with 100 grams sodium water glass having a molar ratio SiO₂:Na₂O of 2.8 and a dry content of 45%. The mixture was maintained under agitation for about 4-5 hours until a homogenous suspension without lumps formed. The temperature was about 25°C during the whole procedure. After 1 week of storage at room temperature the filler had started to settle.

### EXAMPLE 5:

400 grams sodium water glass having a molar ratio SiO₂:Na₂O of 2.8 and a dry content of 45% was mixed with 100 grams glycerol. Then 45 grams Expancel 461^{(R)} (microspheres with a diameter from 5 to 30 µm, containing isobutane as a blowing agent and expanding at 120°C) were added and the mixture was maintained under agitation for about 30 minutes until a homogenous mixture was obtained. Finally, 300 grams kaolin and 100 grams ceno-spheres were added, whereupon the mixture was maintained under agitation for about 1 hour until a pliable putty was obtained. During the whole procedure, the temperature was about 25°C. About 10 grams of the product was allowed to dry for 90 days. When it was heated to 200°C the volume increased 5 times.

### EXAMPLE 6:

A mixture was prepared from 300 grams sodium water glass having a molar ratio SiO₂:Na₂O of 3.3 and a dry content of 37%, 100 grams potassium water glass having a molar ratio SiO₂:K₂O of 3.4 and a dry content of 35%, and 100 grams acrylate dispersion Bayer 509^{(R)} (35% dry content, 700% strain). Then 50 grams Expancel 820^{(R)} (microspheres with a diameter from 5 to 30 µm, containing isobutane as a blowing agent and expanding at 80°C) were added and the mixture was maintained under agitation for about 30 minutes until a homogenous mixture was obtained. Finally, 250 grams kaolin, 100 grams dolomite and 100 grams ceno-spheres were added, whereupon the mixture was maintained under agitation for about 1 hour until a pliable putty was obtained. During the whole procedure, the temperature was about 25°C. About 10 grams of the product was allowed to dry for 90 days. When it was heated to 200°C the volume increased 5 times.

## Claims

1. A method of preparing a binder based on silicate, the binder containing a filler, **characterised** in that a filler is treated with an acid in a slurry, whereupon the slurry is mixed with an aqueous solution containing an alkali metal silicate to a homogenous suspension.

2. A method as claimed in claim 1, **characterised** in that the filler used is comparatively stable in acidic environment and substantially stable in an alkali metal silicate solution.

3. A method as claimed in claim 2, **characterised** in that the filler is selected from kaolin, feldspar, perlite, ceno-spheres, titanium dioxide, aluminum trihydrate, muscovite, diatomite or talc.

4. A method as claimed in any of the claims 1-3, **characterised** in that the particle diameter of the filler is less than about 100 µm.

5. A method as claimed in any of the claims 1-4, **characterised** in that the filler is added in an amount from about 4 to about 80% by weight based on the alkali metal silicate.

6. A method as claimed in any of the claims 1-5, **characterised** in that the filler is treated with a water soluble organic acid.

7. A method as claimed in claim 6, **characterised** in that the acid is selected from formic acid, acetic acid, propionic acid, valeric acid, malonic acid, succinic acid, adipic acid, maleic acid, fumaric acid, glutaric acid, lactic acid, citric acid, malic acid, tartaric acid, glycolic acid, di-glycolic acid or salicylic acid.

8. A method as claimed in any of the claims 1-8, **characterised** in that the alkali metal silicate has a molar ratio SiO₂:M₂O from about 2 to about 4, M being sodium, potassium or mixtures thereof.

9. A method as claimed in any of the claims 1-9, **characterised** in that also a heat expandable agent and a softening agent mixable with silicate are added.

10. A silicate-based binder comprising a filler, the binder being obtainable by the method according to any of the claims 1-9.

## Patentansprüche

1. Verfahren zur Herstellung eines Binde mittels auf Silicatbasis, wobei das Bindemittel einen Füllstoff enthält, **dadurch gekennzeichnet**, daß der Füllstoff mit einer Säure in einer Aufschlämmung behandelt wird, wonach die Aufschlämmung mit einer ein Alkalimetallsilicat enthaltenden wässerigen Lösung zu einer homogenen Suspension vermischt wird.

2. Verfahren nach Anspruch 1, **dadurch gekennzeichnet**, daß der verwendete Füllstoff in saurer Umgebung vergleichsweise stabil ist und in einer Alkalimetallsilicatlösung im wesentlichen stabil ist.

3. Verfahren nach Anspruch 2, **dadurch gekennzeichnet**, daß der Füllstoff ausgewählt ist aus Kaolin, Feldspat, Perlit, Ceno-Spheres, Titandioxid, Aluminiumtrihydrat, Muskovit, Diatomit oder Talkum.

4. Verfahren nach einem der Ansprüche 1 bis 3, **dadurch gekennzeichnet**, daß der Teilchendurchmesser des Füllstoffs weniger als etwa 100 µm beträgt.

5. Verfahren nach einem der Ansprüche 1 bis 4, **dadurch gekennzeichnet**, daß der Füllstoff in einer Menge von etwa 4 bis etwa 80 Gew.-%, bezogen auf das Alkalimetallsilicat, zugegeben wird.

6. Verfahren nach einem der Ansprüche 1 bis 5, **dadurch gekennzeichnet**, daß der Füllstoff mit einer wasserlöslichen organischen Säure behandelt wird.

7. Verfahren nach Anspruch 6, **dadurch gekennzeichnet**, daß die Säure ausgewählt ist aus Ameisen-, Essig-, Propion-, Valerian-, Malon-, Bernstein-, Adipin-, Malein-, Fumar-, Glutar-, Milch-, Zitronen-, Äpfel-, Wein-, Glycol-, Diglycol- oder Salicylsäure.

8. Verfahren nach einem der Ansprüche 1 bis 7, **dadurch gekennzeichnet**, daß das Alkalimetallsilicat ein Molverhältnis SiO₂:M₂O von etwa 2 bis etwa 4 aufweist, wobei M Natrium, Kalium oder Gemische davon darstellt.

9. Verfahren nach einem der Ansprüche 1 bis 8, **dadurch gekennzeichnet**, daß es auch ein in der Hitze blähbares Mittel enthält und ein mit Silicat mischbarer Weichmacher zugegeben wird.

10. Bindemittel auf Silicatbasis, umfassend einen Füllstoff, wobei das Bindemittel erhältlich ist durch ein Verfahren gemäß einem der Ansprüche 1 bis 9.

## Revendications

1. Procédé pour préparer un liant à base de silicate, le liant contenant une charge, caractérisé en ce qu'une charge est traitée avec un acide en suspension, après quoi la suspension est mélangée avec une solution aqueuse contenant un silicate de métal alcalin en une suspension homogène.

2. Procédé selon la revendication 1, caractérisé en ce que la charge utilisée est comparativement stable dans un environnement acide et sensiblement stable dans une solution de silicate de métal alcalin.

3. Procédé selon la revendication 2, caractérisé en ce que la charge utilisée est choisie parmi le kaolin, le feldspath, la perlite, les céno-sphères, le dioxyde de titane, le trihydrate d'aluminium, la muscovite, la diatomite ou le talc.

4. Procédé selon l'une quelconque des revendications 1 à 3, caractérisé en ce que le diamètre de particule de la charge est inférieur à environ 100 µm.

5. Procédé selon l'une quelconque des revendications 1 à 4, caractérisé en ce que la charge est ajoutée en une quantité d'environ 4 à environ 80% en poids par rapport au silicate de métal alcalin.

6. Procédé selon l'une quelconque des revendications 1 à 5, caractérisé en ce que la charge est traitée avec un acide organique hydrosoluble.

7. Procédé selon la revendication 6, caractérisé en ce que l'acide est choisi parmi de l'acide formique, l'acide acétique, l'acide propionique, l'acide valérique, l'acide malonique, l'acide succinique, l'acide adipique, l'acide maléique, l'acide fumarique, l'acide glutarique, l'acide lactique, l'acide citrique, l'acide malique, l'acide tartrique, l'acide glycolique, l'acide di-glycolique ou l'acide salicylque.

8. Procédé selon l'une quelconque des revendications 1 à 7, caractérisé en ce que le silicate de métal alcalin a un rapport molaire SiO₂:M₂O d'environ 2 à environ 4, M étant le sodium, le potassium ou leurs mélanges.

9. Procédé selon l'une quelconque des revendications 1 à 8, caractérisé en ce qu'un agent expansible à la chaleur et un agent de ramollissement mélangeable avec du silicate sont également ajoutés.

10. Liant à base de silicate comprenant une charge, le liant pouvant être obtenu par le procédé selon l'une quelconque des revendications 1 à 9.
